# FASCICULE DE BREVET EUROPEEN

(11) **EP 0 568 443 B1**
(45) Date de publication et mention de la délivrance du brevet: **14.02.1996**
(21) Numéro de dépôt: 93401090.1
(22) Date de dépôt: 27.04.1993
(51) Int. Cl.: B60J 10/04, B60R 13/04

(54) **Armature pour joint et joint d'étanchéité comportant une telle armature**
Armierung für Abdichtungsleisten und Abdichtungsleisten mit einer solchen Armierung
Frame for a sealing strip and sealing strip using such a frame

(30) Priorité: 30.04.1992 FR 9205379
(43) Date de publication de la demande: 03.11.1993
(73) Titulaire: HUTCHINSON, F-75008 Paris (FR)
(72) Inventeur: Guillon, Henri, F-45700 Saint-Maurice sur Fessard (FR)
(74) Mandataire: Orès, Bernard

(56) Documents cités:
- EP-A- 0 127 591
- EP-A- 0 267 073
- EP-A- 0 282 918
- EP-A- 0 376 764
- EP-A- 0 416 433
- GB-A- 768 523
- GB-A- 2 184 398

## Description

L'invention se rapporte principalement à une armature pour joint et à un joint d'étanchéité comportant une telle armature.

De façon usuelle dans l'industrie automobile, l'étanchéité entre, par exemple, une glace et un cadre de porte d'un véhicule, est assurée par un joint en élastomère, notamment en caoutchouc, comprenant une armature métallique.

Le constructeur de véhicule automobile désire, pour des raisons techniques, et/ou esthétiques donner des formes très aérodynamiques aux véhicules. Ces formes le plus souvent arrondies se caractérisent dans la plupart des cas par l'absence d'angles vifs. Il en résulte une courbure importante des glaces ou des cadres de porte qui entraîne un cintrage sur chant ou un galbage important des joints qui ne sont plus propres à assurer une étanchéité désirée.

C'est, par conséquent, un but de la présente invention d'offrir une armature métallique pour joint d'étanchéité qui, tout en rigidifiant le joint de façon désirée, n'oppose qu'une faible résistance au cintrage et/ou au galbage du joint et conserve cette forme galbée ou cintrée.

C'est aussi un but de la présente invention d'offrir un joint d'étanchéité, notamment pour véhicule automobile, susceptible d'être cintré ou galbé sans outillage pour des grands ou des moyens rayons de courbure.

C'est enfin un but de la présente invention d'offrir un joint d'étanchéité, notamment pour véhicule automobile, susceptible d'être cintré ou galbé avec un outil assurant son pliage avec un faible rayon de courbure.

L'invention a principalement pour objet une armature pour joint d'étanchéité, notamment pour véhicule automobile comportant un feuillard faits de chevrons reliés entre eux par au moins deux âmes de liaison (armature du type divulgué, par example, par GB-A-2 184 398), caractérisée en ce qu'elle est repliée de façon à comporter au moins une superposition d'au moins deux âmes au niveau d'une même paire de chevrons adjacents pour faciliter son cintrage sur chant et son galbage.

L'invention a également pour objet un joint pour véhicule, notamment automobile, pour assurer l'étanchéité entre une glace et un cadre de porte, caractérisé en ce qu'il comporte une armature selon l'invention. Divers modes de réalisation de l'armature et du joint selon les revendications indépendantes 1 et 4 sont précisés dans les revendications dépendantes 2 à 3 et 5 à 9

L'invention sera mieux comprise au moyen de la description ci-après et des figures annexées données comme des exemples non limitatifs et sur lesquels :
- la figure 1 est une vue en coupe d'un exemple de réalisation du joint selon la présente invention ;
- la figure 2 est une vue de dessus d'un feuillard susceptible d'être mis en oeuvre, par pliage, pour la réalisation d'une armature selon la présente invention ;
- la figure 3 est une vue en perspective de l'exemple de réalisation d'une armature selon la présente invention.

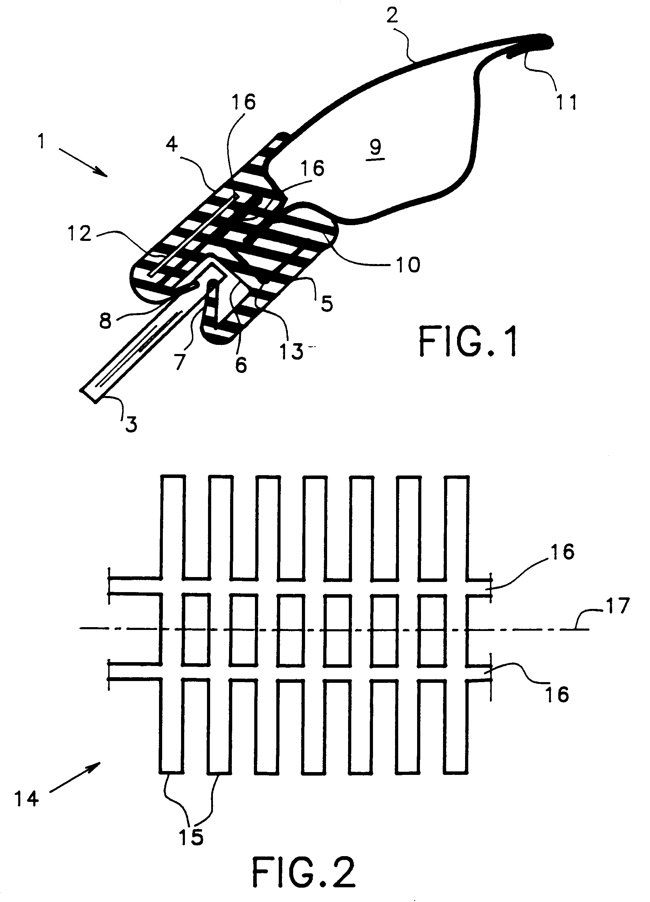

Sur les figures 1 à 3, où les mêmes références désignent les mêmes éléments, les pièces en élastomère sont représentées dans leur condition non sollicitée, comme usuel dans l'industrie du caoutchouc.

Sur la figure 1, on peut voir un joint 1, selon la présente invention, destiné à assurer l'étanchéité entre un cadre de porte 2 et une glace 3. Le joint 1 a une forme générale en H comportant un montant externe 4 et un montant interne 5 reliés par une barre transversale 6. Deux lèvres 7 et 8 prenant naissance aux extrémités inférieures des montants 4 et 5 du H, pénètrent dans une gorge inférieure du H et forment une coulisse assurant l'étanchéité sur deux faces opposées proches du bord libre, typiquement du bord supérieur de la glace 3. Le cadre de porte 2 de la figure 1 comprend deux tôles définissant un caisson 9 et qui se rejoignent à leurs deux extrémités 10 et 11. L'extrémité inférieure 10 des tôles du cadre de porte 2 pénètre dans la gorge supérieure du H, les extrémités supérieures des montants 4 et 5 du H épousant la forme extérieure du caisson 9. Un tube 12 de forme allongée est ménagé dans le montant extérieur 4 du H.

Le joint 1 selon la présente invention comporte une armature 13 en forme de µ rigidifiant le montant externe 4, la barre transversale 6 et la partie supérieure du montant interne 5 du H. L'armature est réalisée par pliage d'un feuillard illustré sur la figure 2 comportant une succession de chevrons 15 allongés, avantageusement rectangulaires reliés par deux âmes 16. La présence d'une pluralité d'âmes 16 peut s'opposer au galbage et surtout au cintrage sur chant d'une armature 13. Une caractéristique essentielle de l'invention réside dans la superposition, lors du plage, par exemple, selon l'axe 17 du feuillard 14 d'au moins deux âmes 16. Avantageusement, toutes les âmes 16 d'une même paire de chevrons adjacents sont superposées, formant une superposition unique ou une pluralité de superpositions. Deux âmes 16 superposées assurent la cohésion de l'armature 13 tout en opposant une résistance beaucoup plus faible à la déformation, notamment lors d'un galbage ou d'un cintrage sur chant que n'opposeraient deux âmes 16 décalées. Il en résulte que le joint 1 selon la présente invention peut sans problème suivre le contour de la fenêtre d'un véhicule automobile. Pour un rayon de courbure important typiquement supérieur ou égal à 400 mm ou un rayon de courbure moyen typiquement égal à 200 mm, le galbage ou le cintrage du joint 1 ne requièrent pas l'utilisation d'outils spéciaux. Pour centrer un joint 1 selon la présente invention avec un rayon de courbure très faible, l'on peut utiliser un outillage, par exemple, de type pince adapté à la courbure que l'on veut conférer au joint.

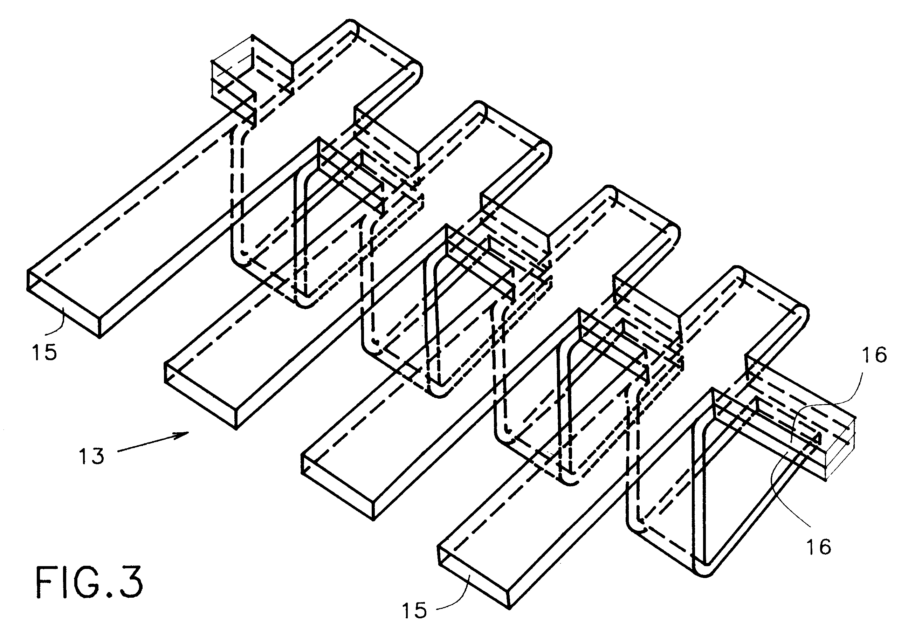

Sur la figure 3, on peut voir une faible longueur de l'armature 13 composée de deux chevrons 15 profilés en forme de µ. Selon la variante illustrée sur la figure 3, les chevrons 15 ne sont reliés que par une unique superposition de deux âmes 16.

Il est bien entendu que l'invention n'est pas limitée à la forme en µ de l'armature 13 ni à la forme en H du joint 1. Toute armature 13 comportant la caractéristique essentielle de la présente invention, à savoir la superposition d'âmes 16, entre dans le cadre de la présente invention. Il en est de même pour tout joint 1 incorporant une telle armature 13. Notamment, l'invention n'est nullement limitée au joint entre une glace 3 et un cadre de porte 2.

Le joint 1 est avantageusement réalisé en un ou plusieurs matériaux du type élastomère, mis en forme par extrusion ou coextrusion autour de l'armature 13 pour constituer un ensemble unitaire et avantageusement monobloc.

## Revendications

1. Armature pour joint d'étanchéité, notamment pour véhicule automobile comportant un feuillard (14) faits de chevrons (15) reliés entre eux par au moins deux âmes de liaison (16), caractérisée en ce qu'elle est repliée de façon à comporter au moins une superposition d'au moins deux âmes (16) au niveau d'une même paire de chevrons (15) adjacents pour faciliter son cintrage sur chant et son galbage.

2. Armature selon la revendication 1, caractérisée en ce que toutes les âmes de liaison (16) du feuillard sont superposées.

3. Armature selon la revendication 1 ou 2, caractérisée en ce qu'elle a la forme d'un µ.

4. Joint pour véhicule, notamment automobile, pour assurer l'étanchéité entre une glace (3) et un cadre de porte (2), caractérisé en ce qu'il comporte une armature selon l'une quelconque des revendications précédentes.

5. Joint selon la revendication 4, caractérisé en ce qu'il a sensiblement la forme d'un H.

6. Joint selon la revendication 4 ou 5, caractérisé en ce qu'il comporte un tube (12), notamment allongé et situé à l'intérieur d'un montant externe (4) du H.

7. Joint selon la revendication 5 ou 6, caractérisé en ce qu'il comporte des lèvres d'étanchéité (7) et (8) et une coulisse pour assurer l'étanchéité sur les faces opposées proches du bord libre, typiquement du bord supérieur d'une glace (3), lesdites lèvres (7,8) prenant naissance au niveau des extrémités inférieures des montants externe (4) et interne (5) du H et pénétrant dans sa gorge inférieure, et en ce qu'il comporte une gorge supérieure destinée à recevoir une partie (10) du cadre de porte (2).

8. Joint selon la revendication 4, 5, 6 ou 7, caractérisé en ce que ledit joint est galbé.

9. Joint selon l'une quelconque des revendications 4 à 8, caractérisé en ce que ledit joint (1) est cintré sur chant.

## Claims

1. Armature for a sealing joint, especially for a motor vehicle, comprising a sheet (14) made up of ribs (15) connected to one another by at least two connecting cores (16), characterised in that it is folded so as to have at least two cores (16) superimposed at the same pair of adjacent ribs (15) to enable it to bend edgewise and curve more easily.

2. Armature according to claim 1, characterised in that all the connecting cores (16) of the sheet are superimposed.

3. Armature according to claim 1 or 2, characterised in that it is in the shape of a "µ".

4. Joint for a vehicle, in particular a motor vehicle, for providing a seal between a window (3) and a door frame (2), characterised in that it comprises an armature according to any of the preceding claims.

5. Joint according to claim 4, characterised in that it is substantially in the form of a letter H.

6. Joint according to claim 4 or 5, characterised in that it has a tube (12), especially an elongate tube, located inside an outer upright (4) of the letter H.

7. Joint according to claim 5 or 6, characterised in that it has sealing lips (7 and 8) and a slide for providing a seal on the opposing, closely located sides of the free edge, typically of the upper edge of a window (3), said lips (7,8) starting at the lower ends of the outer and inner uprights (4,5, respectively) of the H and penetrating into the lower groove thereof, and in that it has an upper groove intended to receive part (10) of the door frame (2).

8. Joint according to claim 4, 5, 6 or 7, characterised in that said joint is curved.

9. Joint according to any of claims 4 to 8, characterised in that said joint (1) is bent edgewise.

## Patentansprüche

1. Bewehrung für eine Dichtung, insbesondere für ein Kraftfahrzeug, mit einem Band (14), das aus Rippen (15) gebildet ist, die durch mindestens zwei Verbindungsstege (16) untereinander verbunden sind, dadurch **gekennzeichnet,** daß sie so umgebogen ist, daß sie mindestens eine Überlagerung mindestens zweier Stege (16) auf der Höhe ein und desselben Paares benachbarter Rippen (15) aufweist, um ihre Umkantung und ihre Auswölbung zu erleichtern.

2. Bewehrung nach Anspruch 1, dadurch **gekennzeichnet,** daß alle Verbindungsstege (16) des Bandes übereinandergelegt sind.

3. Bewehrung nach Anspruch 1 oder 2, dadurch **gekennzeichnet,** daß sie die Form eines µ aufweist.

4. Dichtung für ein Fahrzeug, insbesondere Kraftfahrzeug, zum Sicherstellen der Abdichtung zwischen einer Scheibe (3) und einem Türrahmen (2), dadurch **gekennzeichnet,** daß sie eine Bewehrung nach irgendeinem der vorangehenden Ansprüche aufweist.

5. Dichtung nach Anspruch 4, dadurch **gekennzeichnet,** daß sie im wesentlichen H-förmig ist.

6. Dichtung nach Anspruch 4 oder 5, dadurch **gekennzeichnet,** daß sie ein Rohr (12) aufweist, das insbesondere flachgedrückt ist und im Inneren eines außenliegenden Schenkels (4) des H gelegen ist.

7. Dichtung nach Anspruch 5 oder 6, dadurch **gekennzeichnet,** daß sie Dichtlippen (7) und (8) sowie eine Gleitschiene aufweist, um die Abdichtung auf den gegenüberliegenden, dem freien Rand, typischerweise dem oberen Rand einer Scheibe (3), nahegelegenen Flächen sicherzustellen, wobei die genannten Lippen (7, 8) von der Höhe der unteren Enden des äußeren (4) und inneren (5) Schenkels des H ausgehen und in seine untere Auskehlung eindringen, und daß sie eine obere Auskehlung aufweist, die dazu bestimmt ist, einen Abschnitt (10) des Türrahmens (2) aufzunehmen.

8. Dichtung nach Anspruch 4, 5, 6 oder 7, dadurch **gekennzeichnet,** daß die genannte Dichtung ausgewölbt ist.

9. Dichtung nach irgendeinem der Ansprüche 4 bis 8, dadurch **gekennzeichnet,** daß die genannte Dichtung (1) umgekantet ist.
